# EUROPÄISCHE PATENTSCHRIFT

(11) **EP 2 550 844 B1**
(45) Veröffentlichungstag und Bekanntmachung des Hinweises auf die Patenterteilung: **08.05.2019**
(21) Anmeldenummer: 11715648.9
(22) Anmeldetag: 22.03.2011
(51) Int. Cl.: H05B 33/08, H05B 37/03, F21S 8/00, H05B 37/02

(54) **INDUKTIVE BELEUCHTUNGSEINRICHTUNG**
INDUCTIVE LIGHTING DEVICE
DISPOSITIF D'ÉCLAIRAGE INDUCTIF

(30) Priorität: 23.03.2010 AT 4662010
(43) Veröffentlichungstag der Anmeldung: 30.01.2013
(73) Patentinhaber: D. Swarovski KG, 6112 Wattens (AT)
(72) Erfinder: MAIR, Mathias, 6143 Pfons (AT); STEINER, Thomas, 6112 Wattens (AT); GRUBER, Roland, 6073 Sistrans (AT)
(74) Vertreter: Moore, Michael Richard
(86) Internationale Anmeldenummer: PCT/AT2011/000142
(87) Internationale Veröffentlichungsnummer: WO 2011/116404

(56) Entgegenhaltungen:
- DE-A1-102008 024 779
- US-A1- 2007 013 557
- US-A1- 2007 076 459
- US-A1- 2007 236 159
- US-A1- 2007 291 488
- US-A1- 2008 062 680
- US-A1- 2008 290 738
- US-A1- 2009 243 799

## Beschreibung

Die Erfindung betrifft eine Beleuchtungsanlage, insbesondere zur Markierung von Fahrbahnen und/oder Tunnelwänden mit einer Mehrzahl von induktiven Beleuchtungseinrichtungen, mit einer elektrischen Speiseleitung, einer Mehrzahl von lokalen Koppler, welche jeweils einen Eingang zum Anschluss der elektrischen Speiseleitung, über welchen die Speiseleitung an die lokalen Koppler angeschlossen ist, und eine Sendeinduktivität, insbesondere eine Sendespule, aufweisen, wobei jeweils ein lokaler Koppler zur Übertragung von Energie an eine induktive Beleuchtungseinrichtung vorgesehen ist, und einer Steuereinrichtung, die mit der elektrischen Speiseleitung verbunden ist, und konfiguriert zur Übermittlung von Steuersignalen über die elektrische Speiseleitung an jede induktiven Beleuchtungseinrichtung mittels des jeweiligen lokalen Kopplers.

Die US 2007/0236159 zeigt eine Beleuchtungsanlage mit einer Zentraleinheit, bei der ein hochfrequenter Wechselstrom erzeugt wird, der in eine geschlossene Leitung gespeist wird, die als Sendeinduktivität für mehrere entlang der Leitung angeordnete Beleuchtungseinrichtungen dient. Die Beleuchtungseinrichtungen verfügen über eine Spule zur Erfassung des magnetischen Wechselfeldes entlang der Leitung. Über einen Gleichrichter werden die in den Beleuchtungseinrichtungen angeordneten Leuchtdioden mit Gleichstrom versorgt, wobei eine Überwachungseinheit zur Fehlerdetektion vorgesehen sein kann, die ein codiertes Signal erzeugt, weiches auf das in der Leitung fließende Wechselfeld moduliert wird.

Induktive Beleuchtungseinrichtungen, bei denen die Energie berührungslos an die Beleuchtungseinrichtung übertragen wird, sind an sich im Stand der Technik bekannt. Zu diesem Zweck kann eine elektrische Speiseleitung, beispielsweise in einem Fahrbahnboden versenkt und lokal mit Kopplern versehen werden. Diese Koppler dienen zur Erzeugung eines magnetischen Wechselfeldes, sodass eine induktive Beleuchtungseinrichtung - sofern sie nah genug am jeweiligen Koppler angeordnet ist - durch das sich ändernde Magnetfeld eine Induktionsspannung erzeugen kann, von der eine Lichtquelle der Beleuchtungseinrichtung mit Strom versorgt wird.

Eine derartige induktive Beleuchtungseinrichtung ist beispielsweise in der EP 1 335 477 B1 gezeigt.

Eine Beleuchtungsanlage mit derartigen Kopplern und induktiven Beleuchtungseinrichtung kann darüber hinaus eine Steuereinrichtung umfassen, von der Steuersignale an die Koppler bzw. die Beleuchtungseinrichtungen übermittelbar sind, wodurch die Lichtquelle der Beleuchtungseinrichtung steuerbar ist. Dadurch kann beispielsweise die Lichtquelle selbst aktiviert werden, von Dauerlicht zu Blinklicht und umgekehrt gewechselt werden, die Helligkeit des abgestrahlten Lichtes verändert werden und dergleichen mehr. Oftmals wird zu diesem Zweck die hochfrequente Spannung, mit der eine Sendespule oder allgemein eine Sendeinduktivität in den lokalen Kopplern versorgt wird, moduliert. Dabei können sowohl die Frequenz, die Amplitude als auch die Phase moduliert werden. Mittels dieser Modulation werden Signale kodiert, wobei ein Modulationszustand einer logischen Null und ein anderer Modulationszustand einer logischen Eins entsprechen. Gängige Kodierverfahren sind beispielsweise Frequency-Shift-Keying (FSK), Amplitude-Shift-Keying (ASK) oder Phase-Shift-Keying (PSK). Ein derartiges Verfahren zur Steuerung einer induktiven Beleuchtungsanlage ist beispielsweise in der WO 2005/031944 gezeigt.

Nachteilig ist dabei, dass diese Steuerung nicht in Abhängigkeit von verschiedenen Betriebsparametern der Beleuchtungseinrichtung, insbesondere der Lichtquelle sowie von verschiedenen externen Parametern, wie zum Beispiel der Außentemperatur erfolgen kann.

Das Dokument US 2009/243799 A1 beschreibt ein Beleuchtungssystem, in dem Betriebsparameter einer Last wie zum Beispiel Temperatur oder Umgebungslicht überwacht werden. Das Dokument beschreibt ein Beleuchtungssytem in dem mehrere Lasten unter Verwendung einer Stromquelle unter Strom gesetzt werden, jedoch können Impedanzverluste in einem solchen Beleuchtungssystem erheblich sein.

Aufgabe der Erfindung ist es, diese Nachteile zu vermeiden und den Stand der Technik entsprechend weiterzubilden.

Dies wird durch eine Beleuchtungsanlage mit induktiven Beleuchtungseinrichtungen mit den Merkmalen des Anspruchs 1 gelöst.

Nachstehend werden die jeweiligen Beleuchtungseinrichtungen und die jeweiligen lokalen Koppler der Beleuchtungsanlage einzeln beschrieben.

Die induktive Beleuchtungseinrichtung dient als Beleuchtungseinrichtung für eine Beleuchtungsanlage, die zumindest einen lokalen Koppler aufweist, mit dem berührungslos, das heißt ohne elektrische Verbindung, Energie zur induktiven Beleuchtungseinrichtung übertragen werden kann. Die Beleuchtungseinrichtung umfasst dabei eine Lichtquelle, insbesondere mit zumindest einer Leuchtdiode (LED).

Die Beleuchtungseinrichtung weist des Weiteren eine Steuereinheit auf, mit der die Lichtquelle in Abhängigkeit von Steuersignalen steuerbar ist. Die Steuersignale können dabei von einer Steuereinrichtung der Beleuchtungsanlage an die Beleuchtungseinrichtung übermittelt werden. Für die Übermittlung dieser Steuersignale kommen an sich im Stand der Technik bekannte Verfahren und Bauteile zum Einsatz. Beispielsweise ist es denkbar, dass die Steuereinrichtung einen Transformator aufweist, mittels dem eine geringfügige Wechselspannung in die an der Speiseleitung anliegende Gleichspannung oder niederfrequente Wechselspannung eingekoppelt wird, wodurch eine modulierte Gleichspannung oder niederfrequente Wechselspannung entsteht, die zur Codierung eines Steuersignals dienen kann. Dabei werden diese Steuersignale über die Speiseleitung zu einem lokalen Koppler übermittelt. Sind eine Mehrzahl derartiger Koppler in einer Beleuchtungsanlage vorgesehen, kann das Steuersignal eine Adressierung umfassen, damit der jeweils anzusteuernde Koppler ausgewählt wird. Beim lokalen Koppler kann dieses Steuersignal demoduliert und zumindest temporär abgespeichert werden. In weiterer Folge wird das Steuersignal beispielsweise von einem Mikrokontroller oder einem digitalen Signalprozessor (DSP) durch Modulation in eine hochfrequente Wechselspannung eingekoppelt, die von einer dafür vorgesehenen Einrichtung des lokalen Kopplers erzeugt wird. Über eine Sendeinduktivität, vorzugsweise eine Sendespule wird das modulierte und codierte Signal zur induktiven Beleuchtungseinrichtung übertragen. Zur Codierung selbst sind - wie bereits eingangs erwähnt - mehrere Verfahren, wie z.B. FSK, ASK oder PSK denkbar. Eine Steuereinheit der Beleuchtungseinrichtung dient zur Ansteuerung der Lichtquelle gemäß den Steuersignalen.

Mit einer derartigen Ansteuerung können beispielsweise die Helligkeit oder die Farbe des von der Lichtquelle abgestrahlten Lichts gesteuert werden. Es ist möglich, von einer Blinkfunktion der Lichtquelle in eine Dauerlichtfunktion und umgekehrt zu wechseln, wodurch auf Gefahrensituationen aufmerksam gemacht werden kann. Weiters kann mit derartigen Steuersignalen die Lichtquelle generell aktiviert werden usw.

Weist eine derartige Beleuchtungsanlage eine Mehrzahl derartiger induktiver Beleuchtungseinrichtungen auf, kann auch vorgesehen sein, jede Beleuchtungseinrichtung und jeden Kopplern individuell zu adressieren, damit eine individuelle Ansteuerung möglich ist. Damit ist es beispielsweise ein sogenanntes Lauflicht zu generieren, das zur Markierung von Baustellen für sich annähernde Fahrzeuge dient. Dabei werden bei entlang einer Fahrbahn aufeinander folgenden Beleuchtungseinrichtungen jeweils nacheinander kurz aktiviert, sodass der Eindruck eines "laufenden Lichts" entsteht

Die Beleuchtungseinrichtung weist eine Übertragungseinheit auf, mit der Informationen an die Steuereinrichtung übertragbar sind. In Abhängigkeit dieser Informationen, die aufgrund der oben angeführten individuellen Ansteuermöglichkeit spezifisch für die Beleuchtungseinrichtung sein können, Kann die Steuereinrichtung die Steuersignale abändern, sodass die Steuereinheit der Beleuchtungseinrichtung die Lichtquelle in Abhängigkeit von den von der Übertragungseinheit übertragenen Informationen ansteuern kann. Zu diesem Zweck weist die Steuereinrichtung an sich bekannte elektronische Bauteile wie z.B. Mikroprozessoren oder digitale Signalprozessoren auf. Für diese Steuerung der induktiven Beleuchtungseinrichtung können die oben in Bezug auf den diskutierten Stand der Technik gezeigten Methoden und Bauteile verwendet werden.

Des Weiteren ist es mit einer derartigen Übertragungseinheit möglich, generell Informationen über die Beleuchtungseinrichtung, insbesondere über die Lichtquelle, einer zentralen Einheit zukommen zu lassen. So kann beispielsweise die Übertragungseinheit Statuszustände der Lichtquelle, beispielsweise, ob die Lichtquelle noch funktioniert oder ob die Aktivität der Lichtquelle schlechter wird oder ob beispielsweise einzelne Leuchtdioden ausgefallen sind, an die Steuereinrichtung übermitteln, die diese Informationen an eine zentrale Einheit, beispielsweise eine Computer weiterleiten kann. Dadurch sind derartige Fehlfunktionen erkennbar, ohne dass die jeweilige Beleuchtungseinrichtung an deren Ort überprüft werden muss, wodurch sich der Reparaturaufwand deutlich reduziert.

Diese Informationen können sich auch darauf beziehen, ob die Beleuchtungseinrichtung von dem Koppler genügend oder zuviel Energie erhält, das heißt, ob die Ausrichtung der Beleuchtungseinrichtung relativ zum Koppler und deren Abstand angemessen ist. Falls die Übertragungseinheit meldet, dass eine zu große Strommenge bzw. eine zu hohe Spannung in der induktiven Beleuchtungseinrichtung erzeugt wird, können Mittel, wie z.B. ein zuschaltbarer Widerstand, vorhanden sein, die dieses Übermaß reduzieren.

Der lokale Koppler ist ein Bauteil, das eine Sendeinduktivität, einen Eingang zum Anschluss an eine elektrische Speiseleitung sowie eine Einrichtung zu einer hochfrequenten Spannung, mit der die Sendeinduktivität im Betrieb des Kopplers versorgt wird, aufweist. Der lokale Koppler wird im Bereich der Beleuchtungseinrichtung angeordnet. Die genannten Bauteile können in einem gemeinsamen Gehäuse angeordnet sein. Der Koppler kann über dies eine Empfangseinheit aufweisen, durch die von der Übertragungseinheit übertragenen Daten empfangen werden können. In diesem Fall ist eine Vorrichtung notwendig, mit der die Daten an die Steuereinrichtung weiterleitbar sind. Die Steuereinheit selbst kann eine von den Kopplern getrennte Vorrichtung sein.

In einer bevorzugten Ausführungsform weist die Beleuchtungseinrichtung eine Erfassungseinheit zur Erfassung von Betriebsparametern der Beleuchtungseinrichtung auf. Diese Erfassungseinheit kann zum Beispiel dazu dienen, festzustellen, ob die Lichtquelle überhaupt noch aktiv oder ausgefallen ist, ob einer oder mehrerer Bauteile der Beleuchtungseinrichtung fehlerhaft ist, ob die Lichtquelle überhitzt usw. Es kann sich dabei auch um eine Messeinrichtung handeln, mit der Stromstärken bzw. Spannungen an speziellen Bauteilen der Beleuchtungseinrichtung messbar sind, sodass feststellbar ist, ob genügend Energie an die induktive Beleuchtungseinrichtung übertragen wird. Auch können damit weitere Bauteile der Beleuchtungseinrichtung hinsichtlich ihrer Funktionalität überprüft werden.

Die Übertragungseinheit ist dabei derart ausgebildet, dass die von der Erfassungseinheit erfassten Betriebsparameter an die Steuereinrichtung, gegebenenfalls über eine Zwischenstation, übertragbar sind. Dabei kommen für diese Erfassungseinheit, ebenso wie für die Übertragungseinheit im Stand der Technik bekannte elektrische und elektronische Bauteile zum Einsatz.

In einer weiteren Ausführungsform weist die Beleuchtungseinrichtung wenigstens einen Sensor zur Erfassung externer Parameter auf. Derartige externe Sensoren können beispielsweise Temperatur- oder Helligkeitsmesser sein. Wird z.B. eine tiefe Außentemperatur festgestellt, wodurch sich eine Vereisungsgefahr auf Fahrbahnen ergibt, können Informationen bezüglich dieser Temperatur von der Übertragungseinheit an die Steuereinrichtung übermittelt werden, sodass die Lichtquelle blinkendes Licht oder Licht einer auffälligen Farbe abstrahlt, um auf mögliche Gefahren durch diese Vereisung aufmerksam zu machen. Ist der Sensor zur Messung von Helligkeit ausgebildet, können diesbezügliche Informationen von der Übertragungseinheit an die Steuereinrichtung übermittelt werden, sodass die Lichtquelle aktiviert wird, falls die gemessene Helligkeit unter einen gewissen Wert fällt.

Dabei ist in einer Ausführungsform vorgesehen, dass die Steuereinheit und/oder die Übertragungseinheit einen Mikrokontroller und/oder einen digitalen Signalprozessor umfasst. Derartige Mikrokontroller (µC) oder digitale Signalprozessoren (DSP) sind im Stand der Technik bekannt und dienen in vielfältigster Weise zur Steuerung elektronischer Bauteile. Insbesondere können damit die eingangs erwähnten Kodierungen und Modulationen sowie die zugehörigen Dekodierungen durchgeführt werden.

In einer besonders bevorzugten Ausführungsform weist die Übertragungseinheit eine Vorrichtung zur Lastmodulation auf. Dadurch ist es möglich, den in der Empfängerinduktivität fließenden Strom bzw. die dort anliegende Wechselspannung informationsabhängig zu modulieren und z.B. die von der Erfassungseinheit oder dem Sensor erfassten Parameter zu codieren. Zu diesem Zweck kann es vorgesehen sein, dass ein Widerstand in einem bestimmten Rhythmus ein- und ausgeschaltet wird, wodurch gegebenenfalls zusammen mit einem umschaltbaren R-C-Schwingkreis eine Last, d.h. ein Widerstand in wechselnder Frequenz mit informationsabhängigen Pausen zu- und weggeschaltet wird. Dadurch entsteht ein Frequenzshift in der im Bereich der Empfängerinduktivität anliegenden Wechselspannung, die in üblicher Weise zur Codierung eines Signals durch ein FSK-Verfahren herangezogen werden kann. Es wäre auch denkbar, mit einem umschaltbaren R-C-Schwingkreis einen Phasenshift zu generieren, um ein PSK-Verfahren anzuwenden. Der zu- und wegschaltbare Widerstand kann darüber hinaus zur Anwendung eines ASK-Verfahrens herangezogen werden. Diese geringfügigen Verschiebungen infolge der Modulation in der Wechselspannung der Empfängerinduktivität wirken mittels des magnetischen Wechselfeldes zurück auf eine Sendeinduktivität eines lokalen Kopplers, sodass dieses lastmodulierte Signal dort erkannt und demoduliert und decodiert werden kann. Anschließend kann dieses im lokalen Koppler decodierte und demodulierte Signal weiter an die Steuereinrichtung übertragen werden.

In einer Ausführungsform weist die Lichtquelle wenigstens zwei Leuchtdioden, vorzugsweise wenigstens vier Leuchtdioden auf, die über separate Kanäle mit der Steuereinheit verbunden sind und von der Steuereinheit individuell ansteuerbar sind. Es kann auch vorgesehen sein, dass über diese eigenen Kanäle Informationen bezüglich der jeweiligen Leuchtdiode an die Übertragungseinheit und in weiterer Folge an die Steuereinrichtung übermittelt werden.

Ist dabei vorgesehen, dass wenigstens zwei der über eigene Kanäle von der Steuereinheit individuell ansteuerbaren Leuchtdioden während des Betriebs der Beleuchtungseinrichtung infolge ihrer Einbaulage im Gehäuse der Beleuchtungseinrichtung Licht in entgegengesetzte Richtungen abstrahlen, kann durch die individuelle Ansteuerbarkeit vorgesehen sein, dass in eine Richtung beispielsweise rotes Licht und in eine andere Richtung beispielsweise weißes Licht zur Markierung einer vorgeschriebenen Fahrtrichtung abgestrahlt wird. Durch die individuelle Ansteuerbarkeit ergeben sich hierdurch äußerst flexible Möglichkeiten. So kann beispielsweise in eine Richtung Dauerlicht abgestrahlt wird, während in die entgegengesetzte Richtung Blinklicht abgestrahlt wird.

Ein lokaler Koppler der als Übertragungseinrichtung zur Übertragung von Energie an die induktive Beleuchtungseinrichtung, ohne dass eine elektrische Verbindung zwischen dem Koppler und der Beleuchtungseinrichtung bestehen muss, dient, umfasst eine Sendeinduktivität, die ein sich veränderndes magnetisches Feld erzeugt. Wird innerhalb der Reichweite dieses magnetischen Felds die induktive Beleuchtungseinrichtung angeordnet, kann diese durch den zeitlich sich ändernden magnetischen Fluss eine Induktionsspannung generieren. Die Sendeinduktivität ist beispielsweise als Sendespule ausgebildet, die zusätzlich einen die Permeabilität erhöhenden Kern, wie zum Beispiel einen Eisenkern enthalten kann.

Erfindungsgemäss generiert der Koppler die zum Betrieb der Sendeinduktivität nötige hochfrequente Spannung lokal im Koppler mittels einer Einrichtung zur Erzeugung einer hochfrequenten Spannung, mit der die Sendeinduktivität im Betrieb des Kopplers versorgt wird. Durch die sich ständig mit hoher Frequenz ändernde Stromrichtung wechselt das magnetische Feld der Sendeinduktivität dauernd seine Polarität, was mit einer hohen zeitlichen Änderungsrate des magnetischen Flusses im Sendebereich der Sendeinduktivität einhergeht. Die induktive Beleuchtungseinrichtung kann diese hohe Änderungsrate in eine Induktionswechselspannung umsetzen, mit der eine in der Beleuchtungseinrichtung vorgesehene Lichtquelle, insbesondere mit zumindest einer Leuchtdiode, betrieben wird.

Der Koppler weist zudem einen Eingang zum Anschluss an eine elektrische Speiseleitung auf, mit der die für den Betrieb des Kopplers nötige elektrisch Energie zur Verfügung gestellt wird. Die Steuereinrichtung kann dabei beispielsweise durch Modulation der über die Speiseleitung an den Koppler zugeführte Spannung bzw. Stromstärke Steuersignale an den Koppler übermitteln, die mittels der Sendeinduktivität - gegebenenfalls nach Demodulation und neuerlicher Modulation - an die Steuereinheit der Beleuchtungseinrichtung weitergeleitet werden.

Zur Verwendung in einer Beleuchtungsanlage mit derartigen Kopplern, weist die induktive Beleuchtungseinrichtung eine Empfängerinduktivität auf, mit der von der Sendeinduktivität erzeugtes magnetisches Wechselfeld in eine Induktionswechselspannung umgewandelt werden kann. Die Empfängerinduktivität ist insbesondere als Empfängerspule, gegebenenfalls mit einem die Permeabilität erhöhenden Kern, wie zum Beispiel einem Eisenkern ausgebildet. Ist die Empfängerinduktivität dabei genügend nah an der Sendeinduktivität des Kopplers angeordnet, sodass die Änderungen des magnetischen Flusses von der Empfängerinduktivität erfassbar sind, kann Energie berührungslos übertragen werden. Dabei spielt auch die Ausrichtung der Empfängerinduktivität bezüglich der Sendeinduktivität eine Rolle.

Dabei kann vorgesehen, dass von der Einrichtung zur Erzeugung einer hochfrequenten Spannung im Koppler eine Spannung mit einer Frequenz von mehr als 10 kHz, vorzugsweise mehr als 30 kHz, z.B. 38,5 kHz erzeugt wird. Es sind aber auch andere Frequenzen zur induktiven Energieübertragung verwendbar. Diese Spannung wird der Sendeinduktivität zur Erzeugung eines magnetischen Wechselfeldes zugeführt. Da diese Wechselspannung nur lokal im Bereich des Kopplers vorhanden ist, sind nur geringe Amplituden nötig, wodurch sich etwaige Impedanzverluste und weitere Verluste in engen Grenzen halten.

Der als aktive Sendeeinheit ausgebildete Koppler kann über einen Taktgeber verfügen, der Taktsignale generiert, die einer gewissen Frequenz entsprechen. Diese Taktsignale werden im Betrieb des Kopplers der Einrichtung zur Erzeugung der hochfrequenten Spannung zugeführt, sodass die Frequenz der hochfrequenten Spannung genau kontrollierbar ist: Als Taktgeber sind an sich bekannte elektronische Bauteile aber auch Quarzkristalle einsetzbar.

Es kann auch vorgesehen sein, dass der Koppler einen Mikrokontroller aufweist, wobei der Taktgeber Bestandteil dieses Mikrokontrollers sein kann. Es kann auch vorgesehen sein, dass der Taktgeber mit einem Mikrokontroller verbunden ist. Der Mikrokontroller und zusätzlich oder alternativ ein digitaler Signalprozessor kann dabei mit der Steuereinrichtung verbunden sein, wodurch die Frequenz und/oder die Amplitude der hochfrequenten Spannung steuerbar sind, wobei in Abhängigkeit der Frequenz und zusätzlich oder alternativ in Abhängigkeit der Amplitude der hochfrequenten Spannung die induktive Beleuchtungseinrichtung steuerbar ist.

Wie bereits weiter oben angeführt, kann der Koppler in zweifacher Hinsicht als Sendestation von Informationen dienen. Zum einen können über die Sendeinduktivität Steuersignale auf die von einer dafür vorgesehenen Einrichtung erzeugten hochfrequenten Wechselspannung moduliert und codiert werden und dabei an die Empfängerinduktivität übermittelt und anschließend von der Steuereinheit verarbeitet werden. Zum anderen kann die Sendeinduktivität die von der Übertragungseinheit der Beleuchtungseinrichtung übertragenen Informationen empfangen, d.h. demodulieren und decodieren. Mittels eines Transformators können diese von der Beleuchtungseinrichtung übermittelten Informationen auf eine in der Speiseleitung anliegende Gleichspannung oder niederfrequente Wechselspannung gegebenenfalls zusammen mit einer Adressierung angekoppelt und zur Steuereinrichtung übermittelt werden. Um nicht mit den Steuersignalen der Steuereinrichtung zu kollidieren, kann es vorgesehen sein, dass die Steuereinrichtung eine gewisse Zeitdauer Steuersignale aussendet und für eine daran anschließende Zeitdauer zum Empfang von Informationen von der Beleuchtungseinrichtung bereit ist. Zu diesem Zweck kann beispielsweise der Mikrokontroller des Kopplers einen elektronischen Speicher aufweisen, der die von der Beleuchtungseinrichtung übermittelten, decodierten und demodulierten Signale abspeichert, bis die Steuereinrichtung zum Empfang von Daten bereit ist. Es handelt sich dabei um eine asynchrone Datenübertragung.

Die Decodierung der Signale sowohl im Koppler als auch in der Beleuchtungseinrichtung kann dabei mittels eines Mikrokontrollers erfolgen, beispielsweise durch eine Nulldurchgangsdetektion der Spannung im Zusammenhang mit einer Messung der Dauer zwischen verschiedenen Nulldurchgängen. Die sich durch die Modulation ergebenden Frequenzverschiebungen sind mittels eines in einem elektronischen Speicher abgelegten Übertragungsprotokolls eines FSK-Verfahrens decodierbar.

Der Koppler kann zudem einen DC-DC-Wandler aufweisen, mit dem eine über die elektrische Speiseleitung eingespeiste Gleichspannung transformiert werden kann. Zu diesem Zweck kommen an sich im Stand der Technik bekannte Gleichstromsteller bzw. Gleichspannungssteller und Gleichspannungswandler zum Einsatz. Insbesondere bei langen Speiseleitungen, die mit einer Gleichstromquelle verbunden sind, ist infolge des ohmschen Widerstands der Leitung, die bei in zunehmendem Abstand zur Gleichstromquelle angeschlossenen Kopplern anliegende Gleichspannung abnehmend. Es kann jedoch vorgesehen sein, dass die Einrichtung zur Erzeugung der hochfrequenten Spannung mit einer Gleichspannung mit einem festgelegten Wert betrieben werden muss. Zu diesem Zweck transformiert ein DC-DC-Wandler die am Eingang anliegende Gleichspannung auf diesen Wert,

Darüber hinaus kann der Koppler einen AC-DC-Wandler aufweisen, mit dem eine über die Speiseleitung an den Eingang am Koppler zugeführte Wechselspannung gleichgerichtet und/oder auf einen gewünschten Wert transformiert werden kann. Beim AC-DC-Wandler handelt es sich wiederum um an sich im Stand der Technik bekannte Gleichrichter, wie zum Beispiel verschiedene Brückenschaltungen. Der AC-DC-Wandler kann dabei selbst die Funktionalität zur Transformation der gleichgerichteten Spannung umfassen. Es kann aber auch vorgesehen sein, nachfolgend an einen AC-DC-Wandler, der ausschließlich zur Gleichrichtung einer angelegten Wechselspannung dient, ein wie oben beschriebener DC-DC-Wandler zur Transformation der gleichgerichteten Wechselspannung angeschlossen wird. Bei der über die Speiseleitung zugeführten Wechselspannung handelt es sich bevorzugt um Wechselspannung des öffentlichen Stromnetzes, also um eine niederfrequente Wechselspannung, beispielsweise mit 50 Hz oder 60 Hz.

Die Einrichtung zur Erzeugung der hochfrequenten Spannung kann einen DC-AC-Wechselrichter aufweisen, der zum Betrieb der Sendeinduktivität mit dieser verbunden wird, sodass die von der Einrichtung erzeugte Wechselspannung an der Sendeinduktivität anliegt. Als DC-AC-Wechselrichter sind wiederum im Stand der Technik bekannte elektrische Vorrichtungen verwendbar. Bevorzugt sind dafür elektronische Systeme vorgesehen, die ohne rotierende Teile auskommen, wie beispielsweise verschiedene Brückenschaltungen oder auch Wechselrichterschaltungen (Inverter) mit mehreren Transistoren. Zudem kann der DC-AC-Wechselrichter auch die Funktionalität zur Wandlung der Wechselspannung auf andere Werte aufweisen, beispielsweise indem ein AC-AC-Wandler mit dem DC-AC-Wandler gekoppelt wird.

Der DC-AC-Wechselrichter kann dabei an einen Taktgeber und/oder eine Mikrokontroller angeschlossen sein, wodurch die Amplitude der erzeugten Wechselspannung sowie deren Frequenz genau gesteuert werden können. Ein Mittelwert der von der Einrichtung erzeugten Frequenz dient prinzipiell zur Übertragung der Energie an die induktive Beleuchtungseinrichtung. In die Amplitude und/oder die Frequenz und/oder die Phase können über den Taktgeber bzw. den Mikrokontroller und/oder einen digitalen Signalprozessor Steuersignale, die zur Adressierung der Koppler, insbesondere falls mehrere Koppler an eine Speiseleitung angeschlossen sind, sowie zur speziellen Steuerung der Beleuchtungseinrichtung, zum Beispiel hinsichtlich der Helligkeit, der Farbe oder einer Blinkfunktion der Beleuchtungseinrichtung dienen. Für die Übertragung und Kodierung können die in Bezug auf den diskutierten Stand der Technik beschriebenen Verfahren auch für diese Erfindung verwendet werden.

Der Koppler kann zudem einen Demodulator aufweisen, der zur Demodulation der über die Steuereinrichtung übermittelten Steuersignale dient. Der Demodulator ist in weiterer Folge mit dem Mikrokontroller zur Ansteuerung der Einrichtung zur Erzeugung der hochfrequenten Spannung verbunden.

In einer bevorzugten Ausführungsform weist die induktive Beleuchtungseinrichtung einen AC-DC-Wandler zur Gleichrichtung und/oder zur Transformation einer von der Empfängerinduktivität induzierten Wechselspannung auf. Der AC-DC-Wandler kann dabei wie oben beschrieben ausgebildet sein. Insbesondere Lichtquellen mit zumindest einer LED müssen mit Gleichstrom betrieben werden, sodass ein derartiger Wandler für diese Zwecke nötig ist. LEDs sind dabei aufgrund ihres niedrigen Energieverbrauchs, ihrer langen Lebensdauer und ihrer geringen Wärmeentwicklung, sowie ihrer Flexibilität bevorzugt vorgesehen.

In einer weiteren Ausführungsform weist die induktive Beleuchtungseinrichtung einen Mikrokontroller und/oder einen digitalen Signalprozessor auf. Dieser dient zur Umsetzung von Steuersignalen, die vom Koppler zum Beispiel durch Modulation der Frequenz bzw. der Amplitude übermittelt werden. Der Mikrokontroller steuert dabei die Lichtquelle an, sodass diese Licht in einer anderen Helligkeit abstrahlt, Blinklicht abstrahlt, Licht verschiedener Farbe abstrahlt, prinzipiell aktiviert wird usw. Der Mikrokontroller und/oder der digitale Signalprozessor kann dabei Teil der Steuereinheit und/oder der Übertragungseinheit sein.

Fungiert der Koppler als Zwischenstation bei der Informationsübertragung von der Beleuchtungseinrichtung an die Steuereinrichtung weist der Koppler eine Empfangseinheit, vorzugsweise mit einem Mikrokontroller auf. Dabei kann ein derartiger Mikrokontroller sowohl als Empfangseinheit dienen, mit der Signale der Übertragungseinheit demoduliert werden, als auch als Weiterleitungseinheit, mit der Signale sowohl in Richtung der Steuereinheit als auch in Richtung der Steuereinrichtung, beispielsweise durch Modulation von Spannungen, weitergeleitet werden.

Es ist vorgesehen, dass entlang der Speiseleitung mehrere derartige Koppler und mehrere induktive Beleuchtungseinrichtungen angeordnet sind, wodurch sich längere Fahrbahnbereiche oder auch Tunnel beleuchten bzw. markieren lassen. Es kann dabei vorgesehen sein, die Speiseleitung sowie die Koppler im Fahrbahnboden oder innerhalb der Tunnelwand anzuordnen. Auf der Fahrbahnoberfläche bzw. der Tunnelwandoberfläche werden dann die induktiven Beleuchtungseinrichtungen, die beispielsweise als sogenannte Straßennägel ausgebildet sein können, im jeweiligen Nahbereich der Koppler angeordnet. Ein weiterer Vorteil einer derartigen Beleuchtungsanlage besteht darin, dass aufgrund des Fehlens von elektrischen Verbindungen zwischen einerseits der Speiseleitung und den Beleuchtungseinrichtungen andererseits eine verbesserte Abdichtung der Beleuchtungseinrichtung und der elektrischen Versorgung gegenüber einem Wassereintritt gegeben ist.

In einer Ausführungsform der erfindungsgemäßen Beleuchtungsanlage ist eine Gleichstromquelle vorgesehen, an die die Speiseleitung zur Versorgung des mindestens einen Kopplers angeschlossen ist.

Es kann auch vorgesehen sein, dass statt der Gleichstromquelle eine niederfrequente Wechselstromquelle, beispielsweise mit einer Frequenz von 50 Hz oder von 60 Hz zur Versorgung des mindestens einen Kopplers vorgesehen ist. Eine derartige Beleuchtungsanlage hat den Vorteil, dass die Wechselstromquelle in einfacher Weise durch einen Anschluss an das öffentliche Stromnetz ausgebildet sein kann. Zudem ergibt sich durch einen derartigen Betrieb mit Wechselstrom eine verringerte galvanische Korrosion.

In beiden Fällen muss aufgrund des oder der aktiven Koppler(s) die Speiseleitung nicht selbst als Sendeinduktivität dienen, sodass Impedanzverluste und weitere Verluste, die sich augrund einer längeren, mit einer hochfrequenten Spannung versorgten Speiseleitung ergeben, stark eingegrenzt werden und auch Beleuchtungsanlagen mit längeren Speiseleitungen problemlos betrieben werden können.

In einer Ausführungsform weist die induktive Beleuchtungseinrichtung zum beispielsweise im Fahrbahnboden angeordneten Koppler einen Abstand zwischen 5 und 50 mm auf. Dieser Abstand bezieht sich auf den Abstand der Empfängerinduktivität und der Sendeinduktivität.

Weist die Beleuchtungseinrichtung eine Empfängerspule, vorzugsweise mit einem eisenhaltigen Kern, beispielsweise einem Eisenkern, auf und weist der Koppler eine Sendespule, vorzugsweise ebenfalls mit einem eisenhaltigen Kern, auf, ist in einer Ausführungsform der erfindungsgemäßen Beleuchtungsanlage vorgesehen, dass die Empfängerspule und die Sendespule im Wesentlichen parallel ausgerichtet sind. Bei einer Beleuchtungsanlage mit einer Mehrzahl derartiger Koppler und Beleuchtungseinrichtungen zur Markierung einer Fahrbahn sind die Koppler längs des Fahrbahnrandes anordenbar, sodass die Sendespulen parallel zum Fahrbahnrand ausgerichtet sind. Dadurch ist eine einfache Anordnung der Beleuchtungseinrichtungen an der Fahrbahnoberfläche möglich, indem die Empfängerspule der Beleuchtungseinrichtungen ebenfalls parallel zum Fahrbahnrand ausgerichtet wird. Bei einer derartigen parallelen Ausrichtung wird möglichst viel vom von der Sendespule erzeugten magnetischen Wechselfeld von der Empfängerspule erfasst und zur Erzeugung einer Induktionsspannung benutzt.

Weitere Einzelheiten und Vorteile der vorliegenden Erfindung werden anhand der Figurenbeschreibung unter Bezugnahme auf die Zeichnungen im Folgenden näher erläutert. Darin zeigt:
- Fig. 1: ein schematisches Blockbild einer erfindungsgemäßen Beleuchtungsanlage,
- Fig. 2: eine schematische Darstellung eines Kopplers,
- Fig. 3: eine schematische Darstellung einer induktiven Beleuchtungseinrichtung und
- Fig. 4: eine schematische Darstellung einer induktiven Beleuchtungseinrichtung mit vier Leuchtdioden, die individuell ansteuerbar sind.

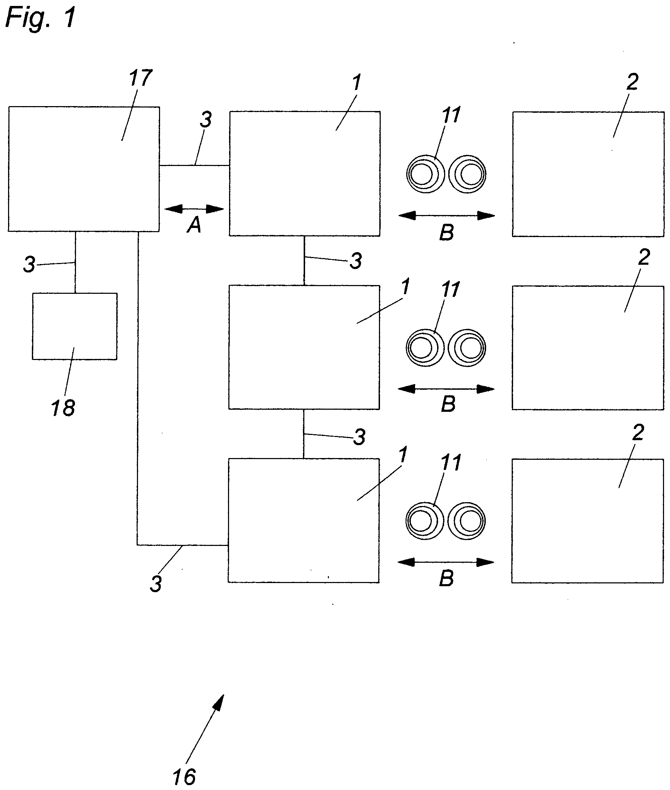

Fig. 1 zeigt eine schematische Blockdarstellung der wesentlichen Bauteile einer erfindungsgemäßen Beleuchtungsanlage 16. Eine Stromquelle 18 ist mit einer Steuereinrichtung 17 über eine Speiseleitung 3 verbunden. Die Stromquelle 18 kann als Gleichstromquelle oder als niederfrequente Wechselstromquelle ausgebildet sein. Des Weiteren sind in diesem Ausführungsbeispiel drei erfindungsgemäß Koppler 1 zur berührungslosen Übertragung von Energie, die jeweils einen Eingang zum Anschluss an eine elektrische Speiseleitung 3 aufweisen, mit der Steuereinrichtung 17 und der Stromquelle 18 über die Speiseleitung 3 verbunden. Die Koppler 1 und die Stromquelle 18 können dabei parallel geschaltet sein. Die Koppler 1 selbst können identisch ausgebildet sein, wobei die Steuereinrichtung 17 über Mittel verfügen kann, mit denen die Koppler 1 adressierbar und somit individuell ansteuerbar sind.

So kann beispielsweise die an einen ersten Koppler 1 gekoppelte induktive Beleuchtungseinrichtung 2 konstant Licht abstrahlen, während eine, über einen weiteren Koppler 1 gekoppelte induktive Beleuchtungseinrichtung 2 blinkendes Licht, z.B. zur Markierung einer Unfallstelle abstrahlt. Zum Zwecke dieser Steuerung werden Steuersignale von der Steuereinrichtung 17 an die Koppler 1 übermittelt.

Da Rückübertragung von Informationen, beispielsweise des vorliegenden Betriebszustandes der Koppler 1 oder der induktiven Beleuchtungseinrichtungen 2 oder externer Parameter an die Steuereinrichtung 17 vorgesehen sein kann, ist der Informationsfluss zwischen Steuereinrichtung 17 und Koppler 1 durch den Doppelpfeil A markiert. Auf entsprechende Doppelpfeile zwischen der Steuereinrichtung 17 und den weiteren Kopplern 1 ist aus Gründen der Übersichtlichkeit verzichtet worden.

Die Sendeinduktivität 5 der Koppler 1 erzeugt ein magnetisches Wechselfeld 11, das in dieser Figur schematisch durch Feldlinien dargestellt ist. Dieses magnetische Wechselfeld 11 erzeugt im Bereich der Empfängerinduktivität 6 der induktiven Beleuchtungseinrichtungen 2 einen zeitlich sich verändernden magnetischen Fluss, der wiederum eine Induktionswechselspannung für den Betrieb der Beleuchtungseinrichtung 2, insbesondere der Lichtquelle 14 erzeugt. Auf eine elektrische Verbindung zwischen den einzelnen Beleuchtungseinrichtungen 2, sowie zwischen den Beleuchtungseinrichtungen 2 und den Kopplern 1 kann aufgrund der berührungslosen Energieübertragung verzichtet werden.

Steuersignale der Steuereinrichtung 17 können über die Koppler 1, beispielsweise durch Frequenz-, Phasen- oder Amplitudenmodulation an die induktiven Beleuchtungseinrichtungen 2 weitergeleitet. Mittels der Übertragungseinheit 20 können die induktiven Beleuchtungseinrichtungen 2 Informationen bezüglich ihres Betriebszustandes an die Steuereinrichtung 17 beispielsweise mittels Frequenz-, Phasen- oder Amplitudenmodulation über die Koppler 1 zurück übermitteln, sodass der Informationsfluss zwischen den Kopplern 1 und den induktiven Beleuchtungseinrichtungen 2 in beide Richtungen des Doppelpfeiles B verläuft.

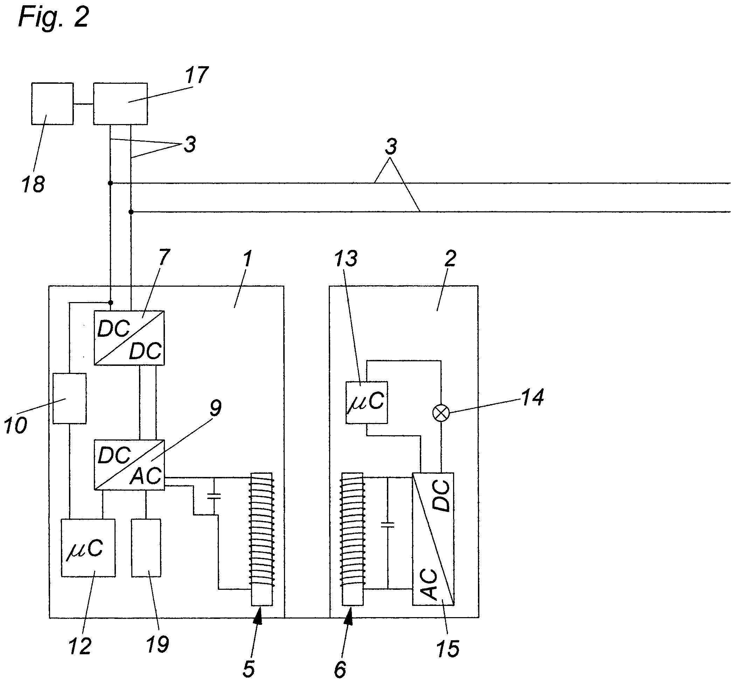

Fig. 2 zeigt eine schematische Blockdarstellung eines Kopplers 1 zur berührungslosen Übertragung von Energie an eine induktive Beleuchtungseinrichtung 2, wie sie beispielsweise zur Markierung einer Fahrbahn oder eines Tunnels Verwendung finden kann. Der Koppler 1 wird in diesem Fall mit Gleichstrom betrieben, das heißt die Stromquelle 18 ist als Gleichstromquelle ausgebildet. Zu diesem Zweck ist eine Speiseleitung 3 an einen dafür vorgesehenen Eingang am Koppler 1 angeschlossen. An die Speiseleitung 3 können weitere Koppler 1 angeschlossen werden. Dies ist in dieser Figur aus Gründen der Übersichtlichkeit nicht dargestellt. Am Eingang des Kopplers 1 liegen beispielsweise 48 Volt an, die von der Gleichstromquelle geliefert werden, da der Koppler 1 sehr nahe im Bereich der Gleichstromquelle angeordnet ist. Bei Beleuchtungsanlagen mit kürzeren Speiseleitungen 3 könnte auch eine Grundversorgung mit 24 V genügen. Da in Folge des Widerstands der Speiseleitung 3 die an weiteren Kopplern 1 anliegende Gleichspannung geringer ist, kann der Koppler 1 auch mit geringeren Spannungen betrieben werden. Zu diesem Zweck ist ein DC-DC-Wandler 7 zur Transformation der am Eingang des Kopplers 1 anliegenden Gleichspannung auf einen geringen Wert, beispielsweise 12 Volt, mit dem eine Einrichtung zur Erzeugung einer hochfrequenten Spannung betrieben wird, vorgesehen. Für diesen DC-DC-Wandler, der als Entnahmebegrenzer für die abgegriffene Spannung dient, können im Stand der Technik an sich bekannte Vorrichtungen verwendet werden.

Die Einrichtung zur Erzeugung einer hochfrequenten Spannung umfasst einen DC-AC-Wechselrichter 9, der aus der vom DC-DC-Wandler 7 zur Verfügung gestellten Gleichspannung eine hochfrequente Wechselspannung erzeugt. Gleichzeitig kann auch vorgesehen sein, die Amplitude der Wechselspannung zu transformieren. Die Frequenz der Wechselspannung liegt beispielsweise bei 38,5 kHz. Die Taktung der Einrichtung zur Erzeugung der hochfrequenten Spannung kann von einem Mikrokontroller 12 und/oder einem separaten Taktgeber 19 erfolgen. Der Taktgeber 19 kann dabei als an sich bekannte elektronische Baueinheit oder als Quarzkristall ausgebildet sein, dessen Taktfrequenz äußerst stabil ist. Demgegenüber kann der Mikrokontroller 12 gegebenenfalls über einen Demodulator 10 Steuersignale empfangen und verarbeiten.

Der Demodulator 10 dient zur Auskopplung der auf die Gleichspannung bzw niederfrequente Wechselspannung der Speiseleitung 3 eingekoppelten Steuersignale der Steuereinrichtung 17. Diese Steuersignale werden vor dem DC-DC-Wandler 7 abgegriffen, da der DC-DC-Wandler 7 die Modulationen auslöschen wurde. Der Demodulator 10 weist einen elektronischen Speicher zur Speicherung der Steuersignale auf, da die Steuereinrichtung 17 nicht durchgehend Steuersignale sendet, sondern während einer gewissen Zeitspanne für den Empfang zum Empfangen von Informationen der Beleuchtungseinrichtungen 2 aktiviert ist. Ein derartiger Demodulator 10 ist im Stand der Technik an sich bekannt, beispielsweise aus der Funktechnik. Dadurch sind verschiedene Betriebsparameter der induktiven Beleuchtungseinrichtung 2 steuer- oder regelbar.

In Abhängigkeit der von der Steuereinrichtung 17 gesendeten, gegebenenfalls über einen Demodulator 10 umgewandelten, Steuersignale kann der Mikrokontroller 12 einen geringfügigen Frequenzshift von beispielsweise +/- 150 Hz oder eine geringfügige Amplitudenmodulation erzeugen und damit Informationen, insbesondere Steuersignale an die induktive Beleuchtungseinrichtung 2 übertragen. An den DC-AC-Wechselrichter 9 ist eine als Sendespule mit Eisenkern ausgebildete Sendeinduktivität 5 angeschlossen, die die hochfrequente Wechselspannung in ein sich rasch änderndes magnetisches Feld umwandelt. Dieses sich rasch ändernde magnetische Feld erzeugt in einer als Empfängerspule mit Eisenkern ausgebildeten Empfängerinduktivität 6 eine ebenfalls hochfrequente Spannung. Da die Beleuchtungseinrichtung 2 eine als Leuchtdiode ausgebildete Lichtquelle 14 umfasst, ist ein AC-DC-Wandler 15 zur Gleichrichtung der Induktionswechselspannung in eine Gleichspannung vorgesehen.

Die Lichtquelle 14 kann dabei aus mehreren, insbesondere zur Abstrahlung verschiedener Farben ausgebildeter Leuchtdioden (LEDs) bestehen. Zur Verarbeitung der von der Steuereinrichtung 17 übermittelten Steuersignale, sowie gegebenenfalls zur Erzeugung eigener Signale, die an die Steuereinrichtung 17 wiederum mittels Frequenzmodulation oder Amplitudenmodulation über die Empfänger- und Sendeinduktivität 6, 5 rück übermittelbar sind, weist die induktive Beleuchtungseinrichtung 2 einen eigenen Mikrokontroller 13 auf, der Teil der Steuereinheit 21 ist, die die Lichtquelle 14 in Abhängigkeit der Steuersignale der Steuereinrichtung 17 steuert.

Nicht dargestellt in dieser Figur sind Vorrichtungen, mit denen Informationen, die von der Beleuchtungseinrichtung 2 an den Koppler 1 übermittelt werden und von der Sendeinduktivität 5 empfangen werden, an die Steuereinrichtung 17 weitergeleitet werden. Diese Vorrichtungen umfassen beispielsweise einen Transformator und können ähnlich der Vorrichtungen der Steuereinrichtung 17 ausgebildet sein, die zur Übermittlung der Steuersignale an den Koppler 1 dienen.

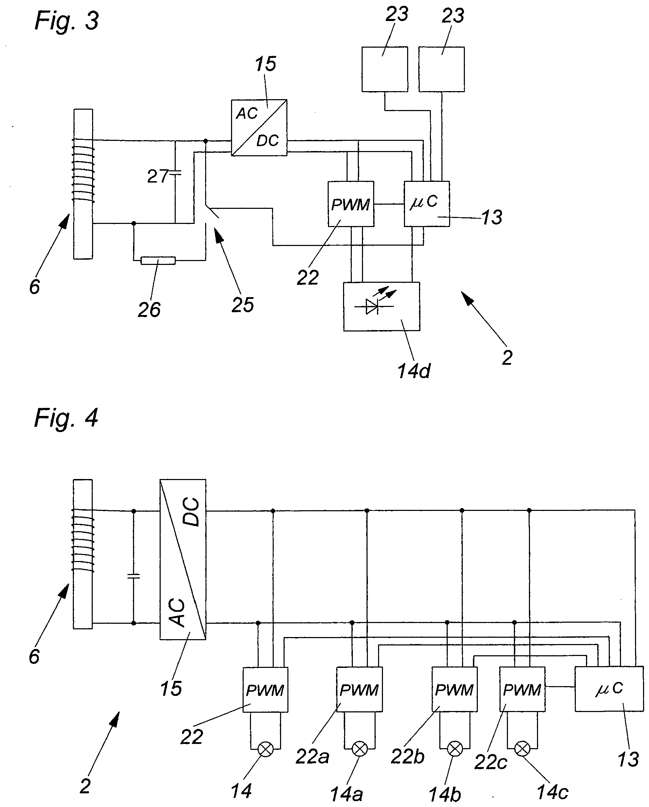

Fig. 3 zeigt eine Ausführungsform einer induktiven Beleuchtungseinrichtung 2 mit der Informationen des Betriebszustands einer Lichtquelle 14d, die eine Mehrzahl von Leuchtdioden aufweist, sowie externer Parameter, wie zum Beispiel die Außentemperatur oder die Helligkeit, die mit zwei Sensoren 23 erfasst werden, an die Steuereinrichtung 17 rück übermittelt werden. In Abhängigkeit dieser Informationen werden neue Steuersignale über den Koppler 1 an die Beleuchtungseinrichtung 2 übermittelt. Die Empfängerinduktivität 6 sowie der AC-DC-Wandler 15 sind wie in den obigen Ausführungsbeispielen ausgebildet. Als Übertragungseinheit fungiert der Mikrokontroller 13 zusammen mit einem Schalter 25 und einem R-C-Schwingkreis. Der Schalter 25 sowie der R-C-Schwingkreis (26, 27) werden vom Mikrokontroller 13 angesteuert und rhythmisch umgeschaltet. Dadurch wird ein Widerstand (26) rhythmisch zugeschaltet, sodass ein Signal mittels einer Lastmodulation in die Wechselspannung der Empfängerinduktivität 6 einkoppelbar ist. Mittels geringfügiger Variationen der Dauer, während der der Widerstand (26) zugeschaltet ist, lassen sich Signale, beispielsweise durch einen Frequenzshift codieren. Die Modulationen der Wechselspannung der Empfängerinduktivität 6 werden von der Sendeinduktivität 5 empfangen und können dort beispielsweise vom Mikrokontroller 12 oder einem weiteren Demodulator demoduliert und decodiert werden.

Ein Pulsweiten-Modulations-Modul (PWM) 22 dient zur Helligkeitssteuerung der Lichtquelle 14d, die eine Mehrzahl von Leuchtdioden aufweist. Das PWM-Modul 22 dient zur stufenlosen Helligkeitssteuerung der Leuchtdioden, wobei das zugehörige Steuersignal von der Steuereinrichtung 17 übersendet wird. Um die Helligkeit der Leuchtdioden herabzuregeln, ist vorgesehen, die Leuchtdiode nicht ständig mit Strom zu versorgen, sondern mit einer gewissen Frequenz, die vom Auge nicht registriert wird und vorzugsweise mehr als 100 Hz beträgt, um den zu den Leuchtdioden fließenden Strom aus- und einzuschalten. Durch Variation der Pulsdauer, während der der Strom fließt, ist eine stufenlose Helligkeitssteuerung möglich. Neben den Vorrichtungen zur Strombegrenzung, die eine Zerstörung der Leuchtdioden vermeiden soll, wird durch ein derartiges PWM-Modul 22 der durch die Leuchtdioden fließende Strom ebenfalls begrenzt, sodass das PWM-Modul 22 als Strombegrenzer dient.

Die Steuereinheit ist durch das PWM-Modul 22 und den Mikrokontroller 13 ausgebildet. Die zur Erfassung von Betriebsparametern der Lichtquelle 14 der Beleuchtungseinrichtung 2 vorgesehene Erfassungseinheit kann ebenfalls durch den Mikrokontroller 13 gegebenenfalls zusammen mit dem PWM-Modul 22 ausgebildet sein. Für die Steuereinheit, die Übertragungseinheit und die Erfassungseinheit können weitere elektronische Bauteile nötig sein, die in dieser schematischen Darstellung fehlen bzw. nicht naher erläutert sind, da diese dem allgemeinen Fachwissen eines Fachmanns unterliegen.

Fig. 4 zeigt schematisch eine induktive Beleuchtungseinrichtung 2 mit einer Empfängerinduktivität 6 und einem AC-DC-Wandler 15 und vier als Leuchtdioden ausgebildete Lichtquellen 14, 14a, 14b, 14c, die über gesonderte Kanäle mittels jeweils zu einer Lichtquelle zugehörigen PWM-Modul 22, 22a, 22b, 22c zur stufenlosen Helligkeitssteuerung und dem Mikrokontroller 13 ansteuerbar sind. Dabei kann es vorgesehen sein, dass die Lichtquellen 14 und 14a bei einer Anordnung zur Fahrbahnmarkierung Leuchtdioden darstellen, die auf einer Gehäuseseite der Beleuchtungseinrichtung 2 angeordnet sind und Licht in eine erste Richtung abstrahlen. Die Lichtquellen 14b und 14c stellen demgegenüber auf einer anderen Gehäuseseite angeordnete Leuchtdioden dar die Licht in einer zur ersten richtung entgegengesetzten Richtung abstrahlen. Für die Funktionalität hinsichtlich der individuellen Ansteuerbarkeit nicht relevante Bauteile sowie Bauteile die aufgrund ihrer allgemeinen Bekanntheit nicht näher erläutert werden müssen, sind in dieser schematischen Figur nicht dargestellt.

Sowohl im Koppler 1 als auch in der induktiven Beleuchtungseinrichtung 2 sind weitere zum Teil nicht dargestellte elektronische Bauteile vorhanden, die zum Betrieb des Kopplers 1 sowie der induktiven Beleuchtungseinrichtung 2 nötig sind. Derartige elektronische Bauteile sind allerdings im Stand der Technik bekannt und unterliegen dem Allgemeinwissen eines Fachmanns auf diesem Gebiet. Insbesondere ist es denkbar, die Schwingkreise der Fig. 2. 3 und 4, bestehend aus einer Kombination aus Sendespule bzw. Empfängerspule mit Kondensatoren statt als Parallelschwingkreis auch als Serienschwingkreis zu realisieren.

Neben den induktiven Beleuchtungseinrichtungen 2 können über die Speiseleitung 3 und die Steuereinrichtung 17 weitere Beleuchtungselemente auch direkt ohne induktive Energieübertragung angeschlossen werden. Diese weiteren Beleuchtungselemente sind in diesem Fall zusätzlich zu den induktiven Beleuchtungseinrichtungen 2 und den Kopplern 1 in einer Beleuchtungsanlage vorgesehen, wobei diese direkten

Beleuchtungselemente ebenfalls ansteuerbar sind und ebenfalls über Vorrichtungen verfügen können, mit denen Informationen über den Betriebszustand der weiteren Beleuchtungselemente an die Steuereinrichtung 17 übermittelbar sind.

Die oben angeführten, nicht näher erläuterten elektronischen Bauteile, wie beispielsweise der Mikrokontroller oder die verschiedenen Wandler und Stromrichter können dabei als an sich im Stand der Technik bekannte Bauteile ausgebildet sein.

## Patentansprüche

1. Beleuchtungsanlage (16), insbesondere zur Markierung von Fahrbahnen und/oder Tunnelwänden, mit
- einer Mehrzahl von induktiven Beleuchtungseinrichtungen (2),
- einer elektrischen Speiseleitung (3),
- einer Mehrzahl von lokalen Kopplern (1), welche jeweils einen Eingang zum Anschluss der elektrischen Speiseleitung (3), über welchen die Speiseleitung (3) an die lokalen Koppler (1) angeschlossen ist, und eine Sendeinduktivität (5), insbesondere eine Sendespule, aufweisen, wobei jeweils ein lokaler Koppler (1) zur Übertragung von Energie an eine induktive Beleuchtungseinrichtung (2) vorgesehen ist,
- einer Steuereinrichtung (17), die mit der elektrischen Speiseleitung (3) verbunden ist, und konfiguriert zur Übermittlung von Steuersignalen über die elektrische Speiseleitung (3) an jede induktiven Beleuchtungseinrichtung (2) mittels des jeweiligen lokalen Kopplers (1), wobei die induktiven Beleuchtungseinrichtungen (2) enthalten jeweils
- eine Lichtquelle (14), insbesondere mit zumindest einer Leuchtdiode (14,14a,14b,14c),
- eine Übertragungseinheit zur Übertragung von Informationen an die Steuereinrichtung (17), und
- eine Steuereinheit zur Steuerung der jeweiligen Lichtquelle (14) in Abhängigkeit von Steuersignalen der Steuereinrichtung (17), **dadurch gekennzeichnet, dass** die lokalen Koppler (1) jeweils eine Einrichtung zur Erzeugung einer hochfrequenten Spannung aufweisen, mit welcher die jeweilige Sendeinduktivität (5) im Betrieb der lokalen Koppler (1) versorgt wird.

2. Beleuchtungsanlage nach Anspruch 1, **dadurch gekennzeichnet, dass** jede der Mehrzahl von induktiven Beleuchtungseinrichtungen (2) eine Erfassungseinheit zur Erfassung von Betriebsparametern der Beleuchtungseinrichtungen (2) aufweist und die jeweilige Übertragungseinheit zur Übertragung der von der Erfassungseinheit erfassten Betriebsparameter ausgebildet ist.

3. Beleuchtungsanlage nach Anspruch 1 oder 2, **dadurch gekennzeichnet, dass** jede der Mehrzahl von induktiven Beleuchtungseinrichtungen (2) mit wenigstens einem Sensor (23) zur Erfassung externer Parameter ausgestattet ist, wobei die jeweilige Übertragungseinheit zur Übertragung der vom wenigstens einem Sensor (23) erfassten Parameter an die Steuereinrichtung (17) ausgebildet ist.

4. Beleuchtungsanlage nach einem der Ansprüche 1 bis 3, **dadurch gekennzeichnet, dass** die jeweilige Steuereinheit und/oder die jeweilige Übertragungseinheit einen Mikrokontroller (13) und/oder einen digitalen Signalprozessor umfasst bzw. umfassen.

5. Beleuchtungsanlage nach einem der Ansprüche 1 bis 4, **dadurch gekennzeichnet, dass** die jeweilige Übertragungseinheit eine Vorrichtung zur Lastmodulation aufweist.

6. Beleuchtungsanlage nach einem der Ansprüche 1 bis 5, **dadurch gekennzeichnet, dass** die jeweilige Lichtquelle (14) wenigstens zwei Leuchtdioden (14, 14a, 14b, 14c), vorzugsweise wenigstens vier Leuchtdioden (14, 14a, 14b, 14c), umfasst, die über eigene Kanäle mit der jeweiligen Steuereinheit verbunden sind, wobei die Steuereinheit konfiguriert ist jede Leuchtdiode (14, 14a, 14b, 14c) individuell anzusteuern.

7. Beleuchtungsanlage nach Anspruch 6, **dadurch gekennzeichnet, dass** die wenigstens zwei Leuchtdioden (14, 14a, 14b, 14c) derart in den jeweiligen induktiven Beleuchtungseinrichtungen (2) angeordnet sind, dass sie bei im Betrieb befindlichen Beleuchtungseinrichtungen (2) Licht in entgegengesetzte Richtungen abstrahlen.

8. Beleuchtungsanlage nach einem der Ansprüche 1 bis 7, **dadurch gekennzeichnet, dass** jede der Mehrzahl von lokalen Kopplern (1) eine Empfangseinheit aufweist, welche konfiguriert ist von der jeweiligen Übertragungseinheit der induktiven Beleuchtungseinrichtungen (2) übertragenen Informationen zu erfassen.

9. Beleuchtungsanlage nach Anspruch 8, **dadurch gekennzeichnet, dass** die Empfangseinheit einen Mikrokontroller (12) umfasst.

10. Beleuchtungsanlage nach einem der Ansprüche 1 bis 9, **dadurch gekennzeichnet, dass** jede der Mehrzahl von induktiven Beleuchtungseinrichtungen (2) eine Empfängerinduktivität (6) aufweist, welche einen Abstand zur jeweiligen Sendeinduktivität (5) der lokalen Koppler (1) zwischen 5 mm und 50 mm aufweist.

11. Beleuchtungsanlage nach Anspruch 10, **dadurch gekennzeichnet, dass** jede Empfängerinduktivität (6) eine Empfängerspule (6), vorzugsweise mit einem eisenhaltigen Kern, aufweist, und dass jede Sendeinduktivität (5) eine Sendespule vorzugsweise mit einem eisenhaltigen Kern aufweist,
wobei die Empfängerspule und die jeweilige Sendespule im Wesentlichen parallel ausgerichtet sind.

12. Beleuchtungsanlage nach einem der Ansprüche 1 bis 11, **dadurch gekennzeichnet, dass** eine Gleichstromquelle vorgesehen ist, an welcher die elektrische Speiseleitung (3) zur Versorgung der lokalen Koppler (1) angeschlossen ist.

13. Beleuchtungsanlage nach einem der Ansprüche 1 bis 11, **dadurch gekennzeichnet, dass** eine niederfrequente Wechselstromquelle vorgesehen ist, welche an die elektrische Speiseleitung (3) zur Versorgung der lokalen Koppler (1) angeschlossen ist.

## Claims

1. Lighting system (16), in particular for marking carriageways and/or tunnel walls, comprising
- a plurality of inductive lighting devices (2),
- an electrical feeder (3),
- a plurality of local couplers (1) which each have an input for connecting the electrical feeder (3), via which input the feeder (3) is connected to the local couplers (1), and a transmitter inductor (5), in particular a transmitter coil, one local coupler (1) for transmitting power to an inductive lighting device (2) being provided in each case,
- a control device (17) which is connected to the electrical feeder (3) and is configured to transmit control signals via the electrical feeder (3) to each inductive lighting device (2) by means of the particular local coupler (1),
the inductive lighting devices (2) each containing
- a light source (14), in particular comprising at least one light-emitting diode (14, 14a, 14b, 14c),
- a transmission unit for transmitting information to the control device (17), and
- a control unit for controlling the particular light source (14) based on control signals from the control device (17),
**characterised in that** the local couplers (1) each have a device for generating a radio-frequency voltage, with which the particular transmitter inductor (5) is supplied during operation of the local couplers (1).

2. Lighting system according to claim 1, **characterised in that** each of the plurality of inductive lighting devices (2) has a detection unit for detecting operating parameters of the lighting devices (2) and the particular transmission unit is designed to transmit the operating parameters detected by the detection unit.

3. Lighting system according to either claim 1 or claim 2, **characterised in that** each of the plurality of inductive lighting devices (2) is equipped with at least one sensor (23) for detecting external parameters, the particular transmission unit being designed to transmit the parameters detected by at least one sensor (23) to the control unit (17).

4. Lighting system according to any of claims 1 to 3, **characterised in that** the particular control unit and/or the particular transmission unit comprises or comprise a microcontroller (13) and/or a digital signal processor.

5. Lighting system according to any of claims 1 to 4, **characterised in that** the particular transmission unit has an apparatus for load modulation.

6. Lighting system according to any of claims 1 to 5, **characterised in that** the particular light source (14) comprises at least two light-emitting diodes (14, 14a, 14b, 14c), preferably at least four light-emitting diodes (14, 14a, 14b, 14c), which are connected to the particular control unit via separate channels, the control unit being configured to control each light-emitting diode (14, 14a, 14b, 14c) individually.

7. Lighting system according to claim 6, **characterised in that** the at least two light-emitting diodes (14, 14a, 14b, 14c) are arranged in the respective inductive lighting devices (2) such that they emit light in opposite directions when the lighting devices (2) are in operation.

8. Lighting system according to any of claims 1 to 7, **characterised in that** each of the plurality of local couplers (1) has a receiving unit which is configured to detect information transmitted by the particular transmission unit of the inductive lighting devices (2).

9. Lighting system according to claim 8, **characterised in that** the receiving unit comprises a microcontroller (12).

10. Lighting system according to any of claims 1 to 9, **characterised in that** each of the plurality of inductive lighting devices (2) has a receiver inductor (6) which has a distance from the particular transmitter inductor (5) of the local couplers (1) of between 5 mm and 50 mm.

11. Lighting system according to claim 10, **characterised in that** each receiver inductor (6) has a receiver coil (6), preferably comprising an iron-containing core, and **in that** each transmitter inductor (5) has a transmitter coil, preferably comprising an iron-containing core, the receiver coil and the particular transmitter coil being oriented substantially in parallel.

12. Lighting system according to any of claims 1 to 11, **characterised in that** a DC power source is provided, to which the electrical feeder (3) is connected for supplying power to the local couplers (1).

13. Lighting system according to any of claims 1 to 11, **characterised in that** an audio-frequency AC power source is provided, which is connected to the electrical feeder (3) for supplying power to the local couplers (1).

## Revendications

1. Système d'éclairage (16), notamment pour le marquage de chaussées et/ou de parois de tunnels, comportant :
- une pluralité de dispositifs d'éclairage inductifs (2),
- une ligne d'alimentation électrique (3),
- un pluralité de coupleurs locaux (1) présentant chacun une entrée pour le raccordement de la ligne d'alimentation électrique (3), entrée par laquelle la ligne d'alimentation (3) est raccordée aux coupleurs locaux (1), et une inductance d'émission (5), notamment une bobine émettrice, chaque coupleur local (1) étant prévu pour transmettre de l'énergie à un dispositif d'éclairage inductif (2),
- un dispositif de commande (17) relié à la ligne d'alimentation électrique (3) et configuré pour transmettre des signaux de commande par l'intermédiaire de la ligne d'alimentation électrique (3) à chaque dispositif d'éclairage inductif (2) au moyen du coupleur local correspondant (1), les dispositifs d'éclairage inductifs (2) comprenant chacun :
- une source de lumière (14), comportant notamment au moins une diode électroluminescente (14, 14a, 14b, 14c),
- une unité de transmission destinée à transmettre des informations aux dispositifs de commande (17), et
- une unité de commande destinée à commander la source de lumière correspondante (14) en fonction des signaux de commande provenant du dispositif de commande (17), **caractérisée en ce que** les coupleurs locaux (1) comportent chacun un dispositif destiné à générer une tension haute fréquence avec laquelle l'inductance d'émission correspondante (5) est fournie pendant le fonctionnement des coupleurs locaux (1).

2. Système d'éclairage selon la revendication 1, **caractérisé en ce que** chacun de la pluralité de dispositifs d'éclairage inductifs (2) comporte une unité de détection permettant de détecter les paramètres de fonctionnement des dispositifs d'éclairage (2) et l'unité de transmission correspondante est conçue pour transmettre les paramètres de fonctionnement détectés par l'unité de détection.

3. Système d'éclairage selon la revendication 1 ou 2, **caractérisé en ce que** chacun de la pluralité de dispositifs d'éclairage inductifs (2) est équipé d'au moins un capteur (23) destiné à détecter des paramètres externes, l'unité de transmission correspondante étant conçue pour transmettre les paramètres détectés par l'au moins un capteur (23) au dispositif de commande (17).

4. Système d'éclairage selon l'une des revendications 1 à 3, **caractérisé en ce que** l'unité de commande correspondante et/ou l'unité de transmission correspondante comprend un microcontrôleur (13) et/ou un processeur de signal numérique.

5. Système d'éclairage selon l'une des revendications 1 à 4, **caractérisé en ce que** l'unité de transmission correspondante comporte un dispositif de modulation de charge.

6. Système d'éclairage selon l'une des revendications 1 à 5, **caractérisé en ce que** la source de lumière correspondante (14) comprend au moins deux diodes électroluminescentes (14, 14a, 14b, 14c), de préférence au moins quatre diodes électroluminescentes (14, 14a, 14b, 14c), lesquelles sont reliées à l'unité de commande correspondante par leurs propres canaux, l'unité de commande étant configurée pour commander individuellement chacune de ces diodes (14, 14a, 14b, 14c).

7. Système d'éclairage selon la revendication 6, **caractérisé en ce que** les au moins deux diodes électroluminescentes (14, 14a, 14b, 14c) sont disposées dans les dispositifs d'éclairage inductifs correspondants (2) de manière à émettre de la lumière dans des directions opposées lorsque les dispositifs d'éclairage (2) sont opérationnels.

8. Système d'éclairage selon l'une des revendications 1 à 7, **caractérisé en ce que** chacun de la pluralité de coupleurs locaux (1) comprend une unité de réception configurée pour détecter des informations transmises par l'unité de transmission correspondante des dispositifs d'éclairage inductifs (2).

9. Système d'éclairage selon la revendication 8, **caractérisé en ce que** l'unité de réception comprend un microcontrôleur (12).

10. Système d'éclairage selon l'une des revendications 1 à 9, **caractérisée en ce que** chacun de la pluralité de dispositifs d'éclairage inductifs (2) comporte une inductance de réception (6) qui se trouve à une distance comprise entre 5 mm et 50 mm par rapport à l'inductance d'émission (5) correspondante des coupleurs locaux (1).

11. Système d'éclairage selon la revendication 10, **caractérisé en ce que** chaque inductance de réception (6) comprend une bobine réceptrice (6), comportant de préférence un noyau contenant du fer, et **en ce que** chaque inductance d'émission (5) comprend une bobine émettrice, comportant de préférence un noyau contenant du fer, la bobine réceptrice et la bobine émettrice correspondante étant essentiellement parallèles.

12. Système d'éclairage selon l'une des revendications 1 à 11, **caractérisé en ce qu'**il est prévu une source de courant continu à laquelle est raccordée la ligne d'alimentation électrique (3) destinée à alimenter les coupleurs locaux (1).

13. Système d'éclairage selon l'une des revendications 1 à 11, **caractérisé en ce qu'**il est prévu une source de courant alternatif basse fréquence raccordée à la ligne d'alimentation électrique (3) destinée à alimenter les coupleurs locaux (1).
